Europäisches Patentamt

**European Patent Office**

Office européen des brevets

(19)

(11) Veröffentlichungsnummer: **0 097 267**
A2

(12)
# EUROPÄISCHE PATENTANMELDUNG

(21) Anmeldenummer: 83105362.4

(22) Anmeldetag: 31.05.83

(51) Int. Cl.³: **B 01 J 8/24**
//F23C11/02

(30) Priorität: 22.06.82 DE 3223182

(43) Veröffentlichungstag der Anmeldung:
04.01.84 Patentblatt 84/1

(84) Benannte Vertragsstaaten:
BE DE FR GB IT NL

(71) Anmelder: Bergwerksverband GmbH
Franz-Fischer-Weg 61
D-4300 Essen 13(DE)

(72) Erfinder: Münzner, Heinrich, Dr. Dipl.-Chem.
Marienstrasse 72
D-4300 Essen 13(DE)

(72) Erfinder: Busch, Udo, Dipl.-Ing.
Lüneburgerstrasse 18
D-4300 Essen 1(DE)

(72) Erfinder: Konrad, Hermann
Barbarakirchgang 6
D-4300 Essen 1(DE)

(54) Wirbelschichtapparat mit Wärmeaustauschflächen.

(57) Bei einem Wirbelschichtapparat mit etwa vertikalen Wärmeaustauschflächen, bei dem unterhalb der Wärmeaustauschflächen gesondert mit Wirbelgas anströmbare Zonen vorgesehen sind, wird eine Steuerung des Wärmeüberganges auf die Wärmeaustauschflächen dadurch erzielt, daß etwa vertikale, jalousieartige Einbauten in Abstand von den Wärmeaustauschflächen oberhalb der Zonengrenzen vorgesehen sind, die eine graduelle Fluidisierung der Ascheschicht zwischen den Wandeinbauten und den Wärmeaustauschflächen ermöglichen.

EP 0 097 267 A2

COMPLETE DOCUMENT

Die Erfindung betrifft einen Wirbelschichtapparat gemäß dem Oberbegriff von Patentanspruch 1. Derartige Wirbelschichtapparate werden für exotherme Reaktionen eingesetzt, bei denen in der Aufheizphase keine übermäßigen Wärmeverluste über die Wärmeaustauschflächen erfolgen soll, was z. B. bei teillastbetriebenen Wirbelschichtfeuerungsanlagen zutrifft.

Ein derartiger Apparat ist aus der US-PS 3 542 523 bekannt, bei dem allerdings in erste Linie Wärmeaustauschrohre bei Nichtgebrauch aus der Wirbelschicht herausgezogen werden sollen, während ihr Belassen in der Wirbelschicht und ein Nichtfluidisieren des unter ihnen liegenden Anströmbodenbereiches sich als unzureichend zur wirksamen Wärmedämmung herausgestellt hat. Demnach ist es die Aufgabe der Erfindung, einen Wirbelschichtapparat der eingangs beschriebenen Art bereitzustellen, bei dem, ohne Herausnehmen von Wärmeaustauschflächen, die Wärmeabgabe der Wirbelschicht in möglichst weitem Umfang auf einfache Weise geändert werden kann. Dies wird erfindungsgemäß durch vertikale, jalousieartige Einbauten gemäß dem kennzeichnenden Teil von Patentanspruch 1 gelöst und durch die Merkmale der Ansprüche 2 und 3 vorteilhaft verbessert.

Durch die erfindungsgemäßen Maßnahmen wird erreicht, daß, je nach Wirbelgasgeschwindigkeit, in den gesondert anströmbaren Zonen der Wärmeübergang auf die Wärmeaustauschflächen durch eine graduelle Fluidisierung der Partikel-, insbesondere Ascheschicht, zwischen den jalousieartigen Einbauten und den Wärmeaustauschflächen zwischen 15 und 100 % des maximalen Wärmeübergangs geregelt werden kann.

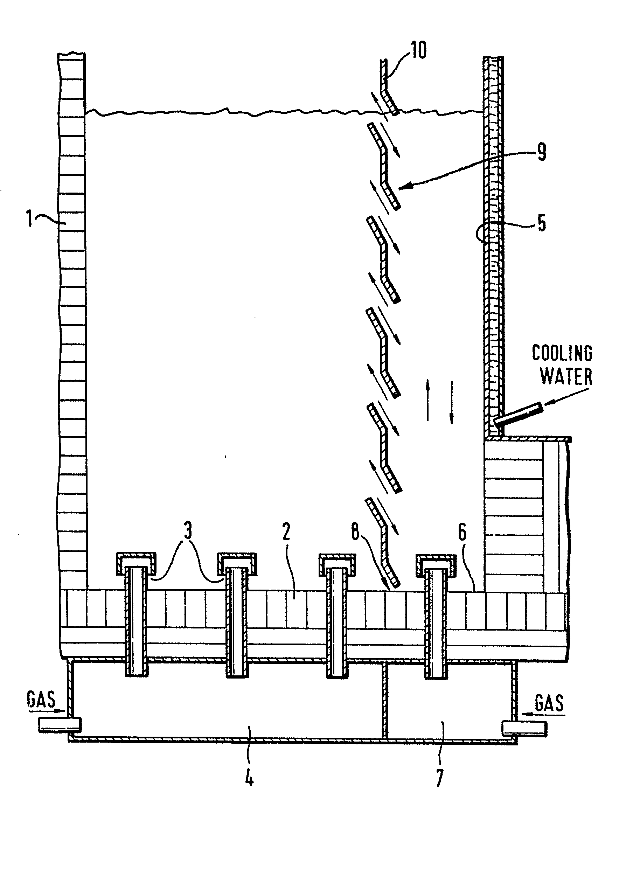

Weitere Vorteile und Ausführungsformen der Erfindung werden in einem bevorzugten Ausführungsbeispiel anhand der

. . .

beiliegenden Zeichnung des näheren erläutert. Die Figur zeigt den Querschnitt durch einen einfachen Wirbelschichtapparat.

Der Wirbelschichtapparat der Figur hat eine gemauerte Seitenwand 1 und ebenso gemauerte Stirnwände, sein Anströmbo-den 2 weist Öffnungen 3 für den Durchtritt des Wirbelmediums aus dem unter dem Anströmboden sich befindenden Windkasten 4. Der Einfachheit der Darstellung halber ist nur die Seitenwand 5 als wassergekühlte Wärmeaustauschfläche ausgebildet. Die sich in unmittelbarer Nähe unterhalb der Wärmeaustauschfläche befindenden Zone 6 des Anströmbodens kann durch einen entsprechend gesonderten Windkastenbe-reich 7 mit regelbaren Wirbelgasmengen beaufschlagt wer-den. Im Abstand von der Wärmeaustauschfläche ist oberhalb der Zonengrenze 8 ein etwa vertikaler, jalousieartiger Wandeinbau 9 aus nach innen zur Zone 6 geneigten Jalousieblenden 10 mit winkligem Querschnitt vorgesehen.

Die Kombinationen von Wärmeaustauschflächen, die auch aus Rohrgittern bestehen können, und den vertikalen, jalousieartigen Einbauten oberhalb der Zonengrenzen von gesondert anströmbaren Zonen des Anströmbodens können auch an allen Seitenwänden und beliebigen inneren Bereichen der Wirbelkammer vorgesehen sein. Eine besonders gute Wärmeisolation ergibt sich, wenn dafür Sorge getragen wird, daß das zwischen die jalousieartigen Einbauten und die zugehörigen Wärmeaustauschflächen eindringende Wirbelgut aus inertem Material, wie Asche, besteht, welches ggf. zuvor aus anderen Bereichen des Wirbelschichtapparates in geeigneter Weise abgeschieden wurde. Schließlich ist es auch möglich, im untersten Bereich der jalousieartigen Einbauten in der Figur nicht dargestellte Durchbrechungen zum übrigen Wirbelschichtraum vorzusehen, so daß unter vorzugsweiser Anwendung von speziellen Ejektorgasdüsen das Wirbelgut zwischen den Wärmeaustauschflächen und den jalousieartigen Einbauten gezielt in den übrigen Wirbelbereich abgezogen werden kann, so daß eine Zirkulation an Wirbelgut entsteht, bei der zwischen jalousieartigen Einbauten und Wärmeaustauschflächen eine Wirbelgutabsenkung und außerhalb dieser Bereiche ein Aufsteigen des Wirbelgutes resultiert. Durch solche Maßnahmen kann die Isolationswirkung des Wirbelgutes zwischen jalousieartigen Einbauten und Wärmeaustauschflächen kombiniert werden mit einer intensiven Durchmischung und Vergleichmäßigung des Verweilzeitspektrums der zu behandelnden Schüttgutpartikel innerhalb der Wirbelschicht; diese Wirkung wird in der Regel aber nur dann herbeigeführt werden, wenn die gesonderte Zone des Anströmbodens voll angewirbelt wird, während zu Zeiten verminderter Anströmung dieses Bereiches und demzufolge Ausbildung einer dichteren oder ggf. sogar ruhenden Schüttgutschicht eine solche Zirkulation nicht stattfindet, da dann ausschließlich der geregelte Wärmeübergang von Bedeutung ist.

Für Versuchszwecke hatte ein Wirbelschichtapparat eine Grundfläche von 0,32 m² und 3,2 m hohe Seitenwände. Eine 0,8 m lange und 0,8 m hohe Seitenwandfläche war als wasserdurchströmte Wärmeaustauschfläche ausgebildet mit einem Wasserdurchsatz von 2,5 m³/h. Als jalousieartige Einbauten wurde im Abstand von 100 mm von der gekühlten Fläche eine Jalousiewand gemäß der Figur mit 800 mm langen Blenden verwendet. Entsprechend breit war die gesondert anströmbare Zone des Wirbelschichtbodens. Als Wirbelgut wurde Kohle in einer Körnung von 0 bis 4 mm und eine geringe Menge (10 Gew.-%) von Kalkstein in einer Körnung von 0 bis 3 mm verwendet. Als Wirbelgas wurde Luft verwendet, die mit 1,5 m/s, bezogen auf den leeren Wirbelschichtapparat, diesen

...

aufwärts durchströmte, wodurch eine Verbrennung der Kohle bei 850°C stattfand. Die Füllmenge des Wirbelschichtapparates an Kohle und Kalkstein betrug 300 kg und die Wirbelschichthöhe im fluidisierten Zustand betrug 1,2 m. Die gesondert anströmbare Zone des Anströmbodens konnte so mit Wirbelluft beaufschlagt werden, so daß oberhalb dieser Zone eine Luftgeschwindigkeit, bezogen auf den leeren Raum, von 0 bis 3 m/s geregelt realisiert werden konnte.

Zunächst wurde die Leistung des Flächenkühlregisters ohne die Jalousiewand ermittelt. Dabei ergab sich unter den angegebenen Reaktionsbedingungen eine Kühlleistung von etwa 115 kW und ein daraus ermittelter Wärmedurchgangskoeffizient von K = 270 bis 280 W/m²/°K. Nach Einbau der Jalousiewand verringerte sich die abgeführte Wärmemenge um 40 % auf ca. 70 kW, und zwar bei gleicher Fluidisationsgeschwindigkeit zwischen Jalousiewand und Flächenkühlregister, wie im Vorversuch. In nachfolgenden Versuchen wurde die Fluidisationsgeschwindigkeit zwischen Jalousiewand und Flächenkühlregister zwischen 0 und 3 m/s variiert. Die Fluidisationsgeschwindigkeit im übrigen Teil des Wirbelschichtapparates betrug nach wie vor konstant 1,5 m/s. Bei diesen Versuchen ergab sich folgende Abhängigkeit zwischen der abgeführten Wärmemenge und der Fluidisationsgeschwindigkeit zwischen Jalousiewand und Flächenkühlregister.

...

Tabelle

| $V_J$ (m/s) | Q (%) | Leistung des Flächenkühlers |
|---|---|---|
| | | ohne Jalousie 100 % bei |
| 0 | 17 | 1,5 m/s. |
| 0,75 | 44 | |
| 1,0 | 50 | $V_J$= Fluidisationsgeschwindig- |
| 1,5 | 60 | keit zwischen Jalousie und |
| 2,0 | 65 | Flächenkühler |
| 2,5 | 69 | |
| 3,0 | 71 | Die Fluidisationsgeschwindig- |
| | | keit im Brennraum betrug kon- |
| | | stant 1,5 m/s. |

Die %-Angaben beziehen sich auf den Wert, der ohne Jalousien erzielt wurde. Die Ergebnisse zeigen, daß es durch
die Erfindung möglich ist, den Wärmeübergang in beträchtlichem Umfang zu variieren.

Bei den Versuchen wurde festgestellt, daß durch die jalousieartigen Einbauten mit nach innen in Richtung auf die
gesondert anströmbare Zone abgeschrägten Jalousieblenden
ein Auslaufen des Wirbelgutes bei verminderter Wirbelgaszufuhr in die Zone zwischen Wandeinbau und Wärmeaustauschfläche vermieden wird und beim Anfahren dieser Zone mit
Wirbelgas keine Verstopfungen auftreten, vielmehr ein zügiger Druckabbau durch die Blenden vollzogen wird.

. . .

BERGWERKSVERBAND GMBH

VERSUCHSBETRIEBE DER BERGBAU-FORSCHUNG GMBH

0097267

Essen, 20.05.1983

Wirbelschichtapparat mit Wärmeaustauschflächen

Patentansprüche

1. Wirbelschichtapparat mit etwa vertikalen Wärmeaustauschflächen (5) und mit etwa vertikalen Wandeinbauten (9) sowie einem Anströmboden (2), bei dem unterhalb der Wärmeaustauschflächen gesondert mit Wirbelgas anströmbare Zonen (6) vorgesehen sind, gekennzeichnet durch etwa vertikale, jalousieartige Einbauten (9) in Abstand von den Wärmeaustauschflächen (5) oberhalb der Zonengrenzen (8) des Anströmbodens.

2. Wirbelschichtapparat nach Anspruch 1, dadurch gekennzeichnet, daß die Jalousieblenden (10) eine Neigung nach innen in Richtung auf die Zonen (6) aufweisen.

3. Wirbelschichtapparat nach Anspruch 1 und 2, dadurch gekennzeichnet, daß die Jalousieblenden einen winkeligen Querschnitt aufweisen.

. . .

BAD ORIGINAL

GAS    GAS

COOLING WATER